# EUROPEAN PATENT APPLICATION

(11) **EP 3 474 050 A1**
(43) Date of publication of application: **24.04.2019**
(21) Application number: 17813432.6
(22) Date of filing: 16.06.2017
(51) Int. Cl.: G02B 6/26, G02B 6/02, G02B 6/24

(54) **METHOD FOR AXIAL ALIGNMENT OF COUPLED MULTICORE OPTICAL FIBER**

(30) Priority: 17.06.2016 JP 2016120668
(71) Applicant: Sumitomo Electric Industries, Ltd., Osaka-shi, Osaka 541-0041 (JP)
(72) Inventor: SAKUMA Hirotaka, Yokohama-shi Kanagawa 244-8588 (JP); HASEGAWA Takemi, Yokohama-shi Kanagawa 244-8588 (JP)
(74) Representative: Hoffmann Eitle
(86) International application number: PCT/JP2017/022349
(87) International publication number: WO 2017/217539

(57) **Abstract**

The present embodiment relates to a method for enabling axis alignment to realize a desired coupling state between CC-MCFs. In this method, a relative position and a relative angle for realizing a desired coupling state are determined by repeatedly performing a step of performing one or both of a relative movement and a relative rotation of a first CC-MCF and a second CC-MCF, and a step of calculating a coupling efficiency index between the first and second CC-MCFs by detecting light propagating through the first and second CC-MCFs, and comparing each of the obtained coupling efficiency indices.

## Description

### Technical Field

The present invention relates to a method for axial alignment of a coupled-core multicore fiber.

### Background Art

Patent Document 1 discloses a technique related to a coupled-core multicore fiber (hereinafter referred to as "CC-MCF").

### Citation List

### Patent Literature

Patent Document 1: Japanese Patent Application Laid-Open No. 2014-240943

### Summary of Invention

### Technical Problem

As a result of examining conventional methods for axial alignment of a CC-MCF, the inventors have found the following problem.

A multicore optical fiber (multi-core fiber, hereinafter referred to as "MCF"), in which a plurality of cores are provided in one optical fiber, is expected as a device that increases a spatial density of information transmission volume, and improves a utilization efficiency of a cross sectional area of a limited communication path such as an underground pipeline and a submarine cable. Among this, according to a coupled-core multicore fiber (coupled-core multi core fiber, hereinafter referred to as "CC-MCF") that couples a waveguide mode between a plurality of cores, the spatial density of the information transmission volume can be further increased since a distance between the cores is short.

Conventionally, as a method for axial alignment of an MCF, there is a method of causing, in a state where one end faces of two MCFs to be connected are facing each other, light to be incident on each of a plurality of cores arranged on another end face of one of the MCFs, to perform axial alignment of these MCFs so as to maximize a power of light emitted from each of a plurality of cores arranged on another end face of the other one of the MCFs (that is, so as to minimize a transmission loss). However, in the CC-MCF, intervals between a plurality of cores are very close, and adjacent cores are strongly coupled. Therefore, it is not possible to use the conventional method for axial alignment of the MCF. This is because the light incident on one core leaks to another core, and the transmission loss cannot be measured accurately. Although it is conceivable to separate light for each of a plurality of super modes (a coupling mode between a plurality of cores) propagating through the CC-MCF and detect a power for each mode with use of a special device, such a special device has a complicated configuration and is expensive.

The present invention has been made to solve the above-described problem, and it is an object of the present invention to provide a method for axial alignment enabling realization of a desired coupling state between CC-MCFs through a simple device configuration.

### Solution to Problem

In order to solve the above-described problem, a method for axial alignment of a CC-MCF according to the present embodiment is a method for performing axial alignment of a first CC-MCF and a second CC-MCF, and includes a preparation step, a first step, a second step, a third step, and a determination step. In the preparation step, the first CC-MCF and the second CC-MCF are prepared. The first CC-MCF has a first end face, a second end face opposed to the first end face, and a plurality of first cores each extending from the first end face toward the second end face. The second CC-MCF has a first end face, a second end face opposed to the first end face, and a plurality of second cores each extending from the first end face toward the second end face. In the first step, the second end face of the first CC-MCF and the first end face of the second CC-MCF are arranged facing each other. In the second step, one or both of a relative position and a relative angle between the second end face of the first CC-MCF and the first end face of the second CC-MCF are changed. In the third step, measurement light is supplied to the second CC-MCF via the first CC-MCF. Thereafter, light emitted from the second end face of the second CC-MCF and including a plurality of super modes is detected. Then, a coupling efficiency index at the relative position and the relative angle changed in the second step is calculated. The coupling efficiency index is defined as a value obtained by integrating a coupling efficiency from one of the first cores to one of the second cores for all the second cores, and averaging the integrated coupling efficiencies for all the first cores. In the determination step, each of the coupling efficiency indices obtained by repeating a set of the second step and the third step is compared. Based on this comparison result, the relative position and the relative angle at which a desired coupling state is realized between the plurality of first cores and the plurality of second cores are determined.

### Advantageous Effects of Invention

According to the present embodiment, axis alignment for realizing a desired coupling state between the CC-MCFs can be performed using a simple device.

### Brief Description of Drawings

Fig. 1 is a perspective view showing one step of a method for axial alignment according to a first embodiment of the present invention.
Fig. 2 is a cross-sectional view taken along line II-II of Fig. 1, and is a view showing a cross section perpendicular to a center axis of a first CC-MCF and a second CC-MCF.
Fig. 3 is a cross-sectional view taken along line III-III of Fig. 1, and is a view showing a cross section perpendicular to a center axis of a first multimode optical fiber and a second multimode optical fiber.
Fig. 4 is a flowchart showing the method for axial alignment of the first embodiment.
Fig. 5 is a perspective view showing one step of a method for axial alignment according to a second embodiment of the present invention.
Fig. 6 is a view showing an example of images captured by cameras 31 to 33, respectively.
Fig. 7 is a view showing a modification, and showing a cross section perpendicular to a center axis of a first CC-MCF and a second CC-MCF.
Fig. 8 is a table showing a connection loss in an example.

### Description of Embodiments

### [Description of Embodiment of Present Invention]

First, contents of each embodiment of the present invention will be individually listed and described.
(1) A method for axial alignment of a coupled-core multicore fiber (CC-MCF) according to the present embodiment is a method for performing axial alignment of a first CC-MCF and a second CC-MCF, and as one aspect thereof, includes a preparation step, a first step, a second step, a third step, and a determination step. In the preparation step, the first CC-MCF and the second CC-MCF are prepared. The first CC-MCF has a first end face, a second end face opposed to the first end face, and a plurality of first cores each extending from the first end face toward the second end face. The second CC-MCF has a first end face, a second end face opposed to the first end face, and a plurality of second cores each extending from the first end face toward the second end face. In the first step, the second end face of the first CC-MCF and the first end face of the second CC-MCF are arranged facing each other. In the second step, one or both of a relative position and a relative angle between the second end face of the first CC-MCF and the first end face of the second CC-MCF are changed. In the third step, measurement light is supplied to the second CC-MCF via the first CC-MCF. Thereafter, light emitted from the second end face of the second CC-MCF and including a plurality of super modes is detected. Then, a coupling efficiency index at the relative position and the relative angle changed in the second step is calculated. In this aspect, the coupling efficiency index is defined as a value obtained by integrating a coupling efficiency from one of the first cores to one of the second cores for all the second cores, and averaging the integrated coupling efficiencies for all the first cores. In the determination step, each of the coupling efficiency indices obtained by repeating a set of the second step and the third step is compared. Based on this comparison result, the relative position and the relative angle at which a desired coupling state is realized between the plurality of first cores and the plurality of second cores are determined.
(2) In this method for axial alignment, with the end faces of the first and second CC-MCFs facing each other, the coupling efficiency index (evaluation data of a coupling state at the relative position and the relative angle changed in the second step) is collectively evaluated for all the cores. According to a research by the present inventor, even with such a method, alignment between CC-MCFs is suitably performed, and connection loss can be reduced. Then, according to this method, it is not necessary to separate light for each super mode propagating through each of two CC-MCFs to be connected, and to detect a power for each mode with use of a special device. Therefore, according to the present embodiment, axial alignment of the CC-MCF can be performed with a simple device.
(3) As one aspect of the present embodiment, a first multimode optical fiber (hereinafter referred to as "MMF") having a core diameter that can include all the end faces of the plurality of first cores arranged on the first end face of the first CC-MCF is arranged such that one end face of the first MMF faces the first end face of the first CC-MCF. Further, in the third step, measurement light is incident on another end face of the first MMF. This makes it possible to cause the measurement light to be incident collectively on all of the plurality of first cores arranged on the first end face of the first CC-MCF through a simple configuration.
(4) As one aspect of the present embodiment, a second MMF having a core diameter that can include all the end faces of the plurality of second cores arranged on the second end face of the second CC-MCF is arranged such that one end face of the second MMF faces the second end face of the second CC-MCF. Then, in the third step, light outputted from another end face of the second MMF and including a plurality of super modes is detected. Also in this case, light (including the plurality of super modes) propagating through the plurality of second cores in the second CC-MCF can be collectively detected through a simple configuration.
(5) Further, as one aspect, the method for axial alignment of a CC-MCF according to the present embodiment includes a preparation step, a first step, a second step, a third step of calculating enhancement data from image information, and a determination step. In the preparation step, a first CC-MCF and a second CC-MCF are prepared. The first CC-MCF has a first end face, a second end face opposed to the first end face, and a plurality of first cores each extending from the first end face toward the second end face. The second CC-MCF has a first end face, a second end face opposed to the first end face, and a plurality of second cores each extending from the first end face toward the second end face. In the first step, the second end face of the first CC-MCF and the first end face of the second CC-MCF are arranged facing each other. In the second step, one or both of a relative position and a relative angle between the second end face of the first CC-MCF and the first end face of the second CC-MCF are changed. In the third step, an image of a second end face of the second CC-MCF is captured. Simultaneously, an image of a portion including an end portion including the second end face of the first CC-MCF and an end portion including the first end face of the second CC-MCF is captured. Then, from positional information of the plurality of first cores and the plurality of second cores obtained from the captured image, a coupling efficiency index at the relative position and the relative angle changed in the second step is calculated. In this aspect, the coupling efficiency index is defined as a value obtained by integrating a coupling efficiency from one waveguide mode of the first core to one waveguide mode of the second core for all waveguide modes of all the second cores, and averaging the integrated coupling efficiencies for all the first cores' waveguide modes. In the determination step, the relative position and the relative angle at which a desired coupling state is realized between the plurality of first cores and the plurality of second cores are determined by comparing each of the coupling efficiency indices obtained by repeating a set of the second step and the third step. For example, with such a method, it is possible to suitably perform axial alignment of the CC-MCF without performing actual light measurement
(6) As one aspect of the present embodiment, each of the plurality of first cores belongs to any one or more sets composed of two or more cores optically coupled to each other. Similarly, each of the plurality of second cores belongs to any one or more sets composed of two or more cores optically coupled to each other. According to this method for axial alignment, even with such a CC-MCF, axis alignment can be performed with a simple device.

As described above, each aspect listed in this Description of Embodiment of Present Invention can be applied to all of the remaining aspects or to all combinations of these remaining aspects.

### [Details of Embodiment of Present Invention]

Hereinafter, a specific structure of the method for axial alignment of a CC-MCF according to the present embodiment will be described in detail with reference to the attached drawings. It should be noted that the present invention is not limited to these illustrative examples, but is indicated by the claims, and it is intended to include meanings equivalent to the claims and all modifications within the scope. Moreover, in the description of the drawings, the same elements are denoted by the same reference numerals, and redundant descriptions are omitted.

### (First Embodiment)

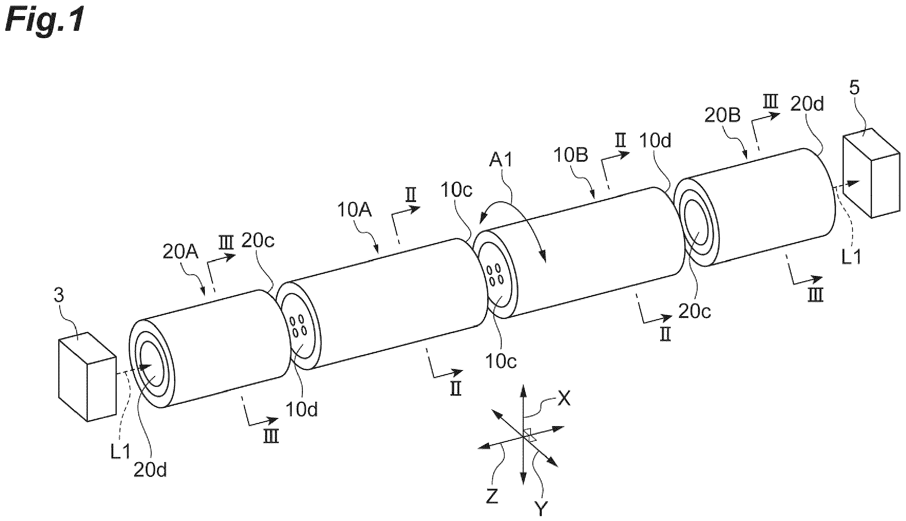

Fig. 1 is a perspective view showing one step of a method for axial alignment according to a first embodiment. The method for axial alignment of the present embodiment is a method for performing axial alignment of a CC-MCF 10A (first CC-MCF) and a CC-MCF 10B (second CC-MCF), and uses a light source 3, an MMF 20A (first MMF), an MMF 20B (second MMF), and a photodetector 5.

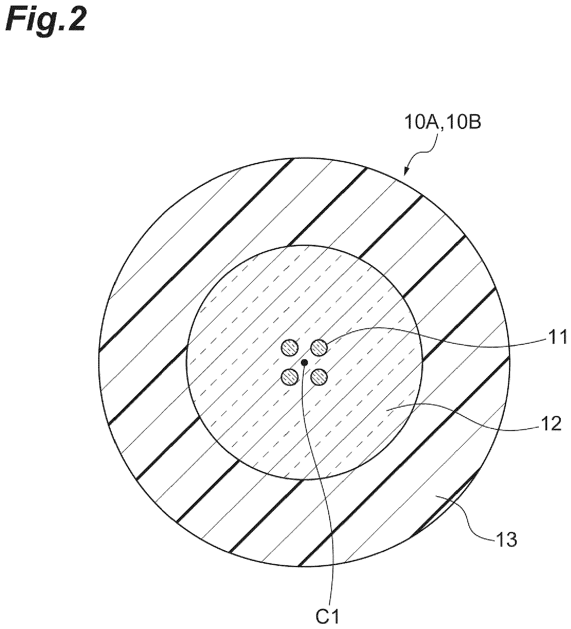

The CC-MCF 10A has one end face 10c (a second end face of the CC-MCF 10A) and another end face 10d (a first end face of the CC-MCF 10A). Similarly, the CC-MCF 10B has one end face 10c (a first end face of the CC-MCF 10B) and another end face 10d (a second end face of the CC-MCF 10B). Here, Fig. 2 is a cross-sectional view taken along line II-II of Fig. 1, and is a view showing a cross section perpendicular to a center axis C1 of each of the CC-MCFs 10A and 10B. As shown in Fig. 2, each of the CC-MCFs 10A and 10B has a plurality of (four in the figure) cores 11, a cladding 12 surrounding the core 11, and a coating 13 covering an outer periphery of the cladding 12. A distance between the plurality of cores 11 is very close as compared with an uncoupled MCF. As an example, a diameter of the core 11 is 10 µm and a distance between core centers of the cores 11 is 11 µm. Since the distance between the core centers of the cores 11 is thus short, and the cores 11 are strongly coupled to each other when light propagates, the four cores 11 can be collectively regarded as a single coupled core.

A mode coupling coefficient between adjacent cores 11 in the CC-MCF 10A and a mode coupling coefficient between adjacent cores 11 in the CC-MCF 10B are both 1 (1/m) or more. Alternatively, a power coupling coefficient between adjacent cores 11 in the CC-MCF 10A and a power coupling coefficient between adjacent cores 11 in the CC-MCF 10B are both 10 (1/km) or more. Here, the mode coupling coefficient is a ratio of a complex amplitude of a component that is coupled to another mode when a certain mode propagates through a unit length. More specifically, as described in Non Patent Document 1, the mode coupling coefficient is defined as a coefficient of a mode coupling equation. In the present embodiment, in order to simplify the description, the mode coupling coefficient between base modes defined in respective adjacent cores is referred to as a mode coupling coefficient between cores. In addition, the power coupling coefficient is a ratio of a power of a component that is coupled to another mode when a certain mode propagates through a unit length. More specifically, as described in Non Patent Document 1, the power coupling coefficient is defined as a coefficient of a power coupling equation. In the present embodiment, in order to simplify the description, the power coupling coefficient between base modes defined in respective adjacent cores in one MCF is referred to as a power coupling coefficient between cores. Further, the core 11 may extend spirally around the center axis C1 along the center axis C1. An interval of the spiral is, for example, 0.5 (m) or less.

The core 11 and the cladding 12 are mainly made of silica glass added with Ge or F. Moreover, the core 11 and the cladding 12 may contain chlorine (C1) mixed in a dehydration step at a time of preparing a preform. Further, the core 11 and the cladding 12 may contain an alkali metal element or an alkaline earth metal element, such as Na, K, Rb, Cs, or Ca, having an effect of lowering viscosity of glass. The coating 13 is made of an ultraviolet curing resin. The coating 13 may be formed of a plurality of layers. For example, since a layer on the cladding 12 side (inner side) has a lower Young's modulus than that of an outer layer (e.g., an outermost layer), it is possible to attenuate a component causing microbending. Meanwhile, the component causing microbending means a component acting on a glass portion (the core 11 and the cladding 12) out of random external forces acting on an outer periphery of each of the CC-MCFs 10A and 10B. Further, since the outermost layer of the coating 13, which is visually recognized from the outside, is colored, it is easy to identify the CC-MCFs 10A and 10B.

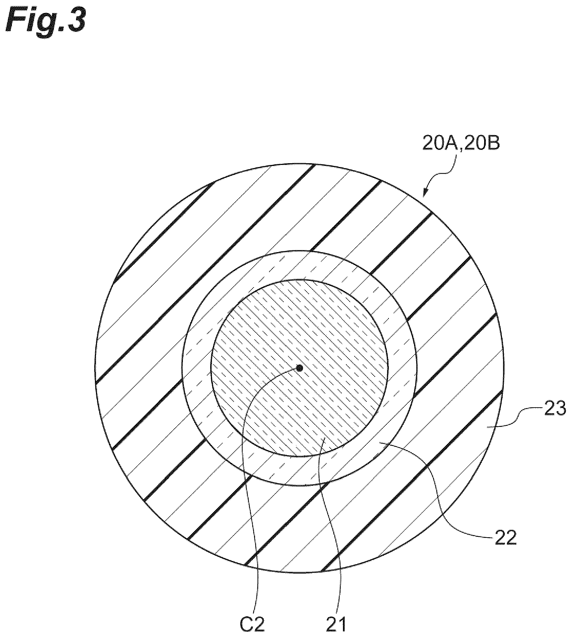

Each of the MMFs 20A and 20B has one end face 20c and another end face 20d. Here, Fig. 3 is a cross-sectional view taken along line III-III of Fig. 1, and is a view showing a cross section perpendicular to a center axis C2 of the MMFs 20A and 20B. As shown in Fig. 3, the MMFs 20A and 20B have a single core 21, a cladding 22 surrounding the core 21, and a coating resin 23 covering an outer periphery of the cladding 22. A diameter of the core 21 of the MMF 20A is large enough to include all the cores 11 of the CC-MCF 10A. A diameter of the core 21 of the MMF 20B is large enough to include all the cores 11 of the CC-MCF 10B. In one example, the diameter of these cores 21 is 100 µm.

Again, Fig. 1 is referred. The CC-MCFs 10A and 10B are arranged such that the one end faces 10c thereof face each other coaxially. In one example, the CC-MCFs 10A and 10B are fixed to a fusion splicer at this time. The MMF 20A is arranged such that the one end face 20c thereof faces the another end face 10d of the CC-MCF 10A coaxially. The MMF 20B is arranged such that the one end face 20c thereof is opposed to the another end face 10d of the CC-MCF 10B coaxially. Each one end face 20c of the MMF 20A and 20B may be in contact with each another end face 10d of the CC-MCF 10A and 10B.

The light source 3 outputs measurement light L1. In one example, a wavelength of the measurement light L1 is 1.55 µm, and the light source 3 is, for example, an LED. The light source 3 is optically coupled to the another end face 20d of the MMF 20A. That is, the light source 3 is optically coupled to the another end face 10d of the CC-MCF 10A via the MMF 20A.

The photodetector 5 detects the measurement light L1 that has passed through the CC-MCFs 10A and 10B. In one example, the photodetector 5 includes, for example, a photodiode and a power meter. The photodetector 5 is optically coupled to the another end face 20d of the MMF 20B. That is, the photodetector 5 is optically coupled to the another end face 10d of the CC-MCF 10B via the MMF 20B.

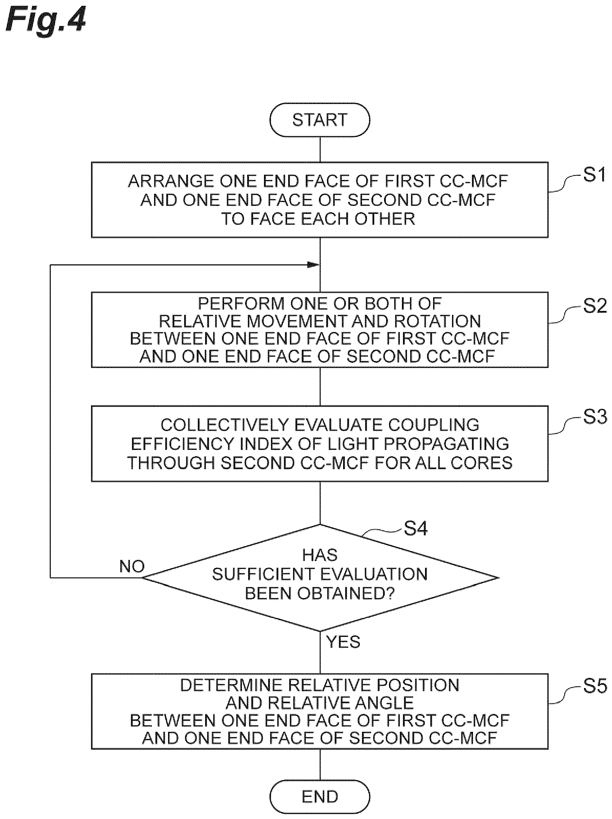

The method for axial alignment of the present embodiment performed using the above configuration is as follows. Fig. 4 is a flowchart showing the method for axial alignment of the first embodiment. First, in a first step S1, the CC-MCFs 10A and 10B prepared in the preparation step are arranged. Specifically, the one end face 10c of the CC-MCF 10A and the one end face 10c of the CC-MCF 10B are arranged facing each other. Further, the one end face 20c of the MMF 20A is arranged facing the another end face 10d of the CC-MCF 10A. Furthermore, the one end face 20c of the MMF 20B is arranged facing the another end face 10d of the CC-MCF 10B.

Next, in a second step S2, one or both of a relative movement and a relative rotation between the one end face 10c of the CC-MCF 10A and the one end face 10c of the CC-MCF 10B are performed. The "relative movement" means a relative movement in a Z direction (first direction) along the center axis C1, a relative movement in an X direction (second direction) perpendicular to the center axis C1, and a relative movement in a Y direction (third direction) perpendicular to both of these directions. Further, the "relative rotation" is a change in a relative angle around the center axis C1 (arrow A1 in Fig. 1). Such movement and rotation can be easily realized by using a function of the fusion splicer.

Then, in a third step S3, a coupling efficiency index of the light L1 propagated in the CC-MCF 10B is collectively evaluated for all the cores 11. Specifically, the measurement light L1 having a known power is made incident on the another end face 20d of the MMF 20A, and the measurement light L1 collectively propagates to all the end faces of the core 11 arranged on the another end face 1Od of the CC-MCF 10A. Then, by detecting the light L1 emitted from the another end face 20d of the MMF 20B by the photodetector 5, the power of the light L1 emitted from the another end face 10d of the CC-MCF 10B is detected. Thereafter, the detected power is evaluated as a coupling efficiency index. Meanwhile, in the present embodiment, the "coupling efficiency index" means a value obtained by integrating a coupling efficiency from one of the cores 11 of the CC-MCF 10A to one of the cores 11 of the CC-MCF 10B for all the cores of the CC-MCF 10B, and averaging the integrated coupling efficiencies for all the cores of the CC-MCF 10A, and can be evaluated by the optical power detected by the photodetector 5.

The determination step includes the following steps S4 and S5. That is, in this determination step, the second step S2 and the third step S3 are repeated alternately until sufficient evaluation is obtained (step S4). Then, a relative position and a relative angle between the one end face 10c of the CC-MCF 10A and the one end face 10c of the CC-MCF 10B are determined by comparing each of the obtained evaluation data (coupling efficiency index) (step S5). For example, the relative position and the relative angle are determined such that the power of the light L1 emitted from the another end face 10d of the CC-MCF 10B becomes maximum (or exceeds a predetermined threshold value).

Effects obtained by the above-described method for axial alignment according to this embodiment are as follows. In this method for axial alignment, the coupling efficiency index is collectively evaluated for all the cores 11 in a state where the one end faces 10c of the CC-MCFs 10A and 10B are opposed to each other. According to a research by the inventor, even with such a method, axial alignment between the CC-MCFs is suitably performed, and the coupling loss between the CC-MCFs 10A and 10B can be reduced. Then, according to this method, it is unnecessary to separate the light for each super mode propagating through the CC-MCFs 10A and 10B, and to detect the power for each mode with use of a special device, so that the axial alignment of the CC-MCF can be performed with a simple device.

Further, as in this embodiment, in the third step S3, the measurement light L1 may be made incident collectively on all the cores 11 of the another end face 10d of the CC-MCF 10A, the power of the light L1 emitted from the another end face 10d of the CC-MCF 10B may be detected by the photodetector 5, and the detected power may be evaluated as a coupling efficiency index. For example, by such a method, axial alignment of the CC-MCF can be suitably performed.

Further, as in the present embodiment, in a state where the one end face 20c of the MMF 20A having a core diameter that can include all the cores 11 of the CC-MCF 10A is arranged facing the another end face 10d of the CC-MCF 10A, the measurement light L1 may be incident on the another end face 20d of the MMF 20A in the third step S3. As a result, the measurement light L1 can be made incident collectively on all the cores 11 of the another end face 10d of the CC-MCF 10A through a simple configuration.

Further, as in the present embodiment, in a state where one end face 20c of the MMF 20B having a core diameter that can include all the cores 11 of the CC-MCF 10B is arranged facing the another end face 10d of the CC-MCF 10B, the light L1 emitted from the another end face 20d of the MMF 20B may be detected in the third step S3. As a result, the power of the light L1 propagating through the CC-MCF 10B can be collectively detected for all the cores 11 through a simple configuration.

### (Second Embodiment)

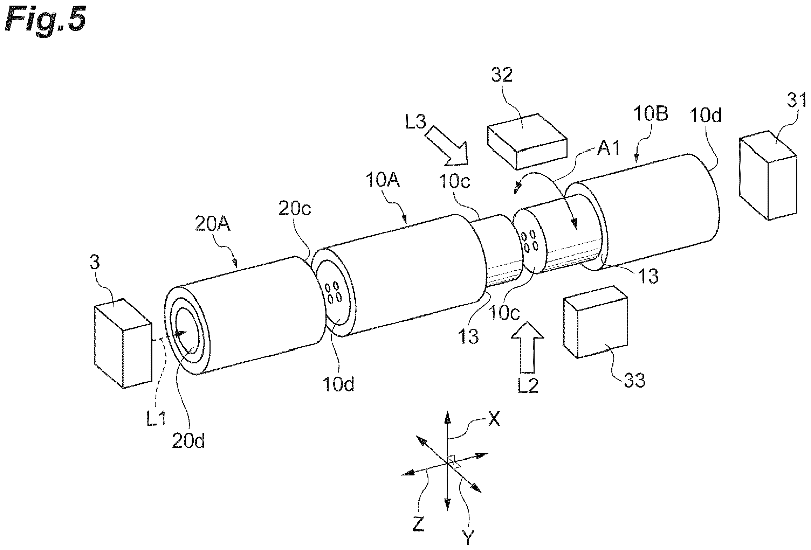

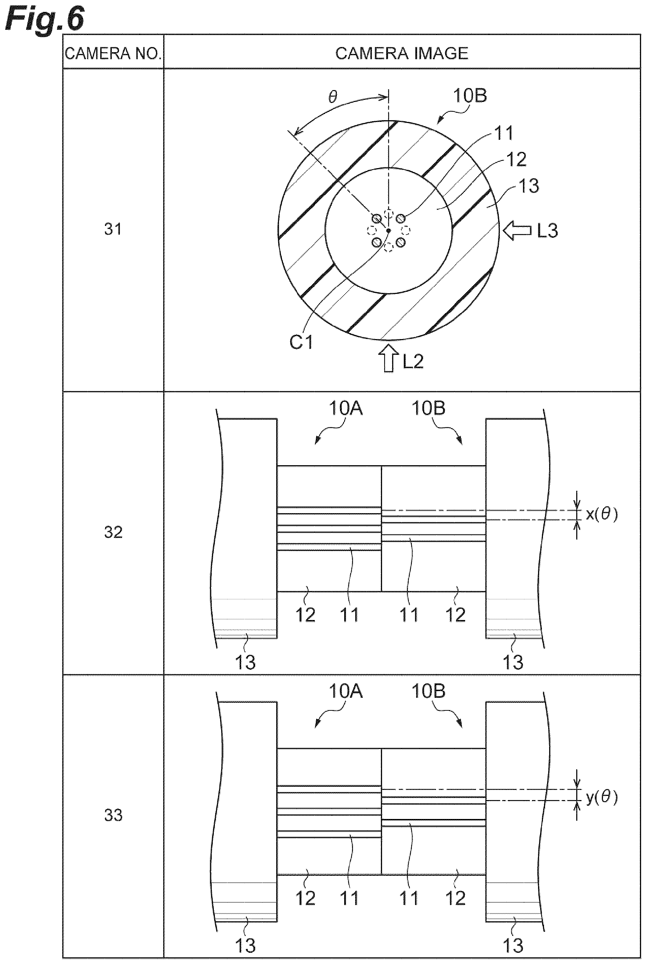

Fig. 5 is a perspective view showing one step of a method for axial alignment according to a second embodiment of the present invention. The method for axial alignment of the present embodiment is a method for performing axial alignment of a CC-MCF 10A and a CC-MCF 10B, and uses a light source 3, an MMF 20A, and at least three cameras 31 to 33. Meanwhile, a coating 13 is removed from an end portion including one end face 10c of the CC-MCF 10A, and a coating 13 is also removed from an end portion including one end face 10c of the CC-MCF 10B. Further, in the present embodiment, the MMF 20B of the first embodiment is not used. Further, Fig. 6 is a view showing an example of images captured by the cameras 31 to 33, respectively.

The first camera 31 captures an image of another end face 10d of the CC-MCF 10B from a Z direction along a center axis C1 of the CC-MCF 10B. In an upper part of Fig. 6, a captured image of the first camera 31 is shown. From this image, a relative angle θ from a reference position of a core arranged on the another end face 10d is obtained. The second camera 32 captures an image of a core position on each one end face 10c of the CC-MCFs 10A and 10B irradiated with light L2 from an X direction perpendicular to the center axis C1. In a middle part of Fig. 6, a captured image of the second camera 32 is shown. From this image, a relative position x (θ) along the X direction between the core in the CC-MCF 10A and the core in the CC-MCF 10B is obtained. In addition, the third camera 33 captures an image of a core position on each one end face 10c of the CC-MCFs 10A and 10B irradiated with light L3 from a Y direction perpendicular to both the Z direction and the X direction. In a lower part of Fig. 6, a captured image of the third camera 33 is shown. From this image, a relative position y (θ) along the Y direction between the core in the CC-MCF 10A and the core in the CC-MCF 10B is obtained. Meanwhile, instead of using the two cameras 32 and 33, image capturing of the core position from the X direction and the Y direction may be realized by using one camera and an optical part such as a mirror, and switching a position and an angle of the optical part.

In the method for axial alignment for the present embodiment, a first step S1 and a second step S2 are the same as those in the first embodiment, and therefore the description thereof is omitted. In a third step S3, an image of a state is captured in which the one end face 10c of the CC-MCF 10A and the one end face 10c of the CC-MCF 10B are arranged facing each other, and evaluation data calculated based on the obtained image is evaluated as a coupling efficiency index. It should be noted that the coupling efficiency index means a value obtained by integrating a coupling efficiency from one waveguide mode of the core 11 in the CC-MCF 10A to one waveguide mode of the core 11 in the CC-MCF 10B for all waveguide modes of all the cores in the CC-MCF 10B and averaging the integrated coupling efficiencies for all waveguide modes of all the cores in the CC-MCF 10A. In a conventional uncoupled MCF, the coupling efficiency is preferably low since the coupling efficiency to another core 11 becomes crosstalk that degrades the transmission performance. Whereas, in a case of the CC-MCF, light coupled to another core also contributes to the transmission of signals, which is different from the uncoupled MCF. Therefore, in a case of the CC-MCF, it is desirable to maximize a sum of the coupling efficiencies to all the cores in addition to the cores in a CC-MCF different from the CC-MCFs to be arranged facing each other. Meanwhile, when the number of cores is large, instead of obtaining the sum of the coupling efficiencies to all the cores, it may be substituted by a sum of coupling efficiencies to an opposing core (a core in another one of the CC-MCFs arranged facing each other) and an adjacent core (an adjacent core in the same CC-MCF). Specifically, assuming that a rotation angle about the center axis C1 is θ, a side-face image from the X direction as a function of θ, a side-face image from the Y direction as a function of θ, and an end-face image from the Z direction at a known θ are acquired by the cameras 31 to 33. Then, the coupling efficiency is calculated from the relative position of each core 11 calculated based on these images. Then, a relative position and a relative angle between the one end faces 10c of the CC-MCFs 10A and 10B are determined so as to maximize the sum of the calculated coupling efficiencies. Here, the coupling efficiency is preferably a mode-dependent coupling efficiency calculated for each super mode propagating through the core 11 in the CC-MCF 10A and the core 11 in the CC-MCF 10B. The mode-dependent coupling efficiency is a difference in the coupling efficiency between the super modes formed by the coupled core 11.

As in the present embodiment, in the third step S3, an image of a state may be captured in which the one end face 10c of the CC-MCF 10A and the one end face 10c of the CC-MCF 10B are arranged facing each other, and a coupling efficiency calculated based on the obtained image may be evaluated as a coupling efficiency index. Even with such a method, axial alignment of the CC-MCF can be suitably performed.

### (Modification)

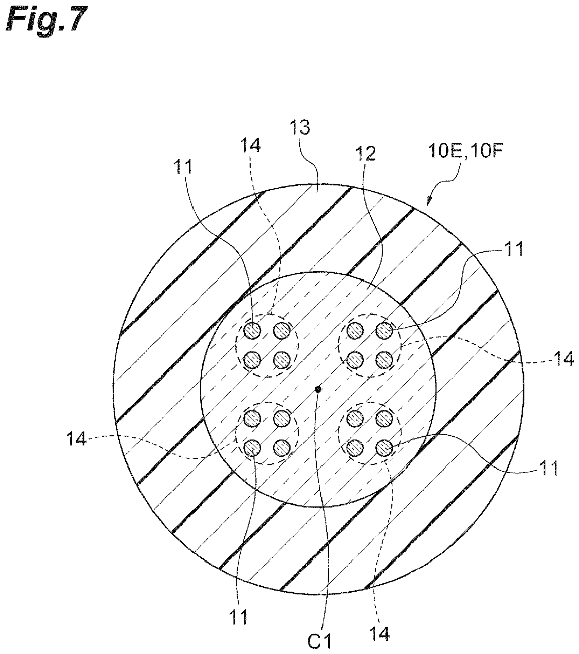

Fig. 7 is a view showing a modification of each of the above embodiments and showing a cross section perpendicular to a center axis C1 of a CC-MCF 10E (first CC-MCF) and a CC-MCF 10F (second CC-MCF). The CC-MCFs 10E and 10F of this modification have a plurality of groups 14 composed of two or more cores 11 coupled to each other. Fig. 7 shows, as an example, four groups 14 composed of four cores 11 tightly coupled to each other are arranged side by side in a circumferential direction. According to each of the above embodiments, even when each of the CC-MCFs 10A and 10B has the configuration as in this modification, axial alignment of these CC-MCFs can be suitably performed, and the connection loss can be reduced.

### (Result of Axis Alignment)

Here, a result of the axial alignment of each of the above embodiments will be described. First, in an evaluation of the first embodiment, a measurement system except the CC-MCF 10B in the configuration of the measurement system shown in ig. 1 was prepared. That is, the configuration was such that the light having passed through the CC-MCF 10A was directly received by the MMF 20B. Then, the measurement light L1 was outputted from the light source 3, and a power Pin of the light L1 emitted from the another end face 20d of the MMF 20B was detected by the photodetector 5. Next, the CC-MCF 10B was inserted between the CC-MCF 10A and the MMF 20B, and the measurement system shown in Fig. 1 was prepared. Then, while the measurement light L1 was outputted from the light source 3 and a power Pout of the light L1 emitted from the another end face 20d of the MMF 20B was detected by the photodetector 5, axial alignment of the CC-MCFs 10A and 10B was performed so as to maximize the power Pout, and thereafter, fusion splicing of the CC-MCFs 10A and 10B was performed.

Further, in a result of the axial alignment of the second embodiment, a power Pin was detected similarly to that in the first example. Next, the CC-MCF 10B was inserted between the CC-MCF 10A and the MMF 20B, and the measurement system shown in Fig. 5 was prepared. Then, while measurement light L1 was outputted from the light source 3, two side-face images and one end-face image were acquired. From a relative position of each core 11 calculated based on these images, a coupling efficiency was calculated. Axial alignment was performed so as to maximize this coupling efficiency, and fusion splicing of the CC-MCFs 10A and 10B was performed. Furthermore, after the fusing, the same measurement system as in Fig. 1 was constructed and the power Pout was detected.

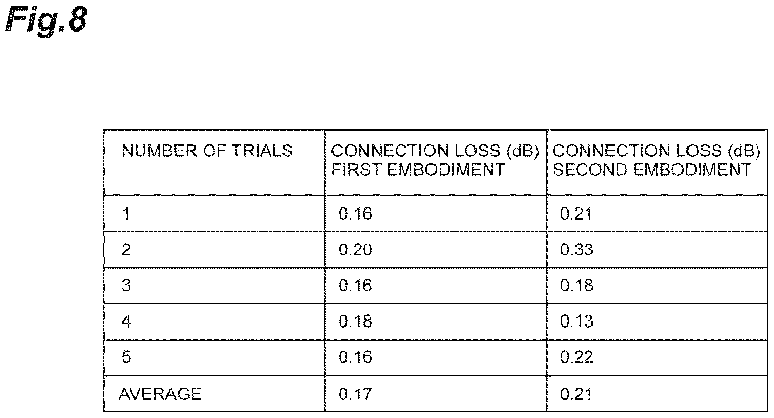

Fig. 8 is a table showing a difference in a logarithmic scale between the Pin and the Pout in each of the above embodiments, that is, a connection loss. It should be noted that the table shows results of five trials of each example and an average value thereof. As is apparent from the table of Fig. 8, according to the method for axial alignment of each of the above-described embodiments, it is possible to suppress the connection loss to a practical value such as less than 0.5 dB.

The method for axial alignment of the CC-MCF according to the present invention is not limited to the above-described embodiments, and various other modifications are possible. For example, the above-described embodiments may be combined with each other in accordance with necessary purposes and effects. Moreover, while the axial alignment of the CC-MCFs 10A and 10B having the four cores 11 is exemplified in the first embodiment and the second embodiment, the number of cores of the CC-MCF is not limited to this, but may be any given number of 2 or more.

### Reference Signs List

3 ... light source; 5 ... photodetector; 10A ... first CC-MCF (first coupled-core multicore fiber); 10B ... second CC-MCF (second coupled-core multicore fiber); 10c ... one end face; 10d ... another end face; 11 ... core; 12 ... cladding; 13 ... coating; 20A ... first MMF (first multimode optical fiber); 20B ... second MMF (second multimode optical fiber); 20c ... one end face; 20d ... another end face; 21 ... core; 22 ... cladding; 23 ... coating resin; 31 to 33 ... camera; C1, C2 ... center axis; and L1 to L3 ... measurement light.

## Claims

1. A method for axial alignment of a coupled-core multicore fiber, the method comprising:
a preparation step of preparing a first coupled-core multicore fiber having a first end face, a second end face opposed to the first end face, and a plurality of first cores each extending from the first end face toward the second end face, and a second coupled-core multicore fiber having a first end face, a second end face opposed to the first end face, and a plurality of second cores each extending from the first end face toward the second end face;
a first step of arranging the second end face of the first coupled-core multicore fiber and the first end face of the second coupled-core multicore fiber to face each other;
a second step of changing one or both of a relative position and a relative angle between the second end face of the first coupled-core multicore fiber and the first end face of the second coupled-core multicore fiber;
a third step of supplying measurement light into the second coupled-core multicore fiber through the first coupled-core multicore fiber, detecting light emitted from the second end face of the second coupled-core multicore fiber, and calculating a coupling efficiency index at the relative position and the relative angle changed in the second step, the coupling efficiency index depending on a value obtained by integrating a coupling efficiency from one of the plurality of first cores to one of the plurality of second cores for all of the plurality of second cores, and averaging the integrated coupling efficiencies for all the plurality of first cores; and
a determination step of determining a relative position and a relative angle at which a desired coupling state is realized between the plurality of first cores and the plurality of second cores by comparing each of coupling efficiency indices obtained by repeating a set of the second step and the third step.

2. The method for axial alignment of a coupled-core multicore fiber according to claim 1, wherein
a first multimode optical fiber having a core diameter capable of including all end faces of the plurality of first cores arranged on the first end face of the first coupled-core multicore fiber is arranged to cause one end face of the first multimode optical fiber to face the first end face of the first coupled-core multicore fiber; and
the measurement light is incident on another end face of the first multimode optical fiber in the third step.

3. The method for axial alignment of a coupled-core multicore fiber according to claim 1 or 2, wherein
a second multimode optical fiber having a core diameter capable of including all end faces of the plurality of second cores arranged on the second end face of the second coupled-core multicore fiber is arranged to cause one end face of the second multimode optical fiber to face the second end face of the second coupled-core multicore fiber; and
light outputted from another end face of the second multimode optical fiber and including a plurality of super modes is detected in the third step.

4. A method for axial alignment of a coupled-core multicore fiber, the method comprising:
a preparation step of preparing a first coupled-core multicore fiber having a first end face, a second end face opposed to the first end face, and a plurality of first cores each extending from the first end face toward the second end face, and a second coupled-core multicore fiber having a first end face, a second end face opposed to the first end face, and a plurality of second cores each extending from the first end face toward the second end face;
a first step of arranging the second end face of the first coupled-core multicore fiber and the first end face of the second coupled-core multicore fiber to face each other;
a second step of changing one or both of a relative position and a relative angle between the second end face of the first coupled-core multicore fiber and the first end face of the second coupled-core multicore fiber;
a third step of capturing an image of the second end face of the second coupled-core multicore fiber, capturing an image of a portion including an end portion including the second end face of the first coupled-core multicore fiber and an end portion including the first end face of the second coupled-core multicore fiber, and calculating a coupling efficiency index at the relative position and the relative angle changed in the second step, the coupling efficiency index being defined by a value obtained by, from positional information of the plurality of first cores and the plurality of second cores obtained from a captured image, integrating a coupling efficiency from one waveguide mode of the plurality of first cores to one waveguide mode of the plurality of second cores for all waveguide modes of all second cores, and averaging the integrated coupling efficiencies for all the first cores' waveguide modes; and
a determination step of determining a relative position and a relative angle at which a desired coupling state is realized between the plurality of first cores and the plurality of second cores by comparing each of coupling efficiency indices obtained by repeating a set of the second step and the third step.

5. The method for axial alignment of a coupled-core multicore fiber according to any one of claims 1 to 4, wherein
each of the plurality of first cores belongs to any one or more sets composed of two or more cores optically coupled to each other; and each of the plurality of second cores belongs to any one or more sets composed of two or more cores optically coupled to each other.
